# EUROPEAN PATENT SPECIFICATION

(11) **EP 3 148 907 B1**
(45) Date of publication and mention of the grant of the patent: **23.09.2020**
(21) Application number: 15738973.5
(22) Date of filing: 27.05.2015
(51) Int. Cl.: B29D 30/30, B65H 23/038, B65H 35/06

(54) **APPARATUS FOR LAYING PAIRS OF ELONGATED ELEMENTS ON A FORMING DRUM AND PROCESS FOR OBTAINING TYRES FOR VEHICLE WHEELS**
VORRICHTUNG ZUM AUSLEGEN VON PAAREN VON LÄNGLICHEN ELEMENTEN AUF EINER FORMUNGSTROMMEL UND VERFAHREN ZUR HERSTELLUNG VON REIFEN FÜR FAHRZEUGRÄDER
APPAREIL POUR DÉPOSER DES PAIRES D'ÉLÉMENTS ALLONGÉS SUR UN TAMBOUR DE FORMAGE ET PROCÉDÉ POUR OBTENIR DES PNEUMATIQUES POUR DES ROUES DE VÉHICULE

(30) Priority: 30.05.2014 IT MI20141013
(43) Date of publication of application: 05.04.2017
(73) Proprietor: Pirelli Tyre S.p.A., 20126 Milano (IT)
(72) Inventor: BIGOGNO, Mauro, I-20126 Milano (IT); PULICI, Lorenzo, I-20126 Milano (IT); DE CHIRICO, Ludovico, 20032 Cormano- MI (IT)
(74) Representative: PGA S.p.A.
(86) International application number: PCT/IB2015/053967
(87) International publication number: WO 2015/181740

(56) References cited:
- EP-A1- 0 649 730
- EP-A1- 0 712 739
- EP-A1- 2 735 434
- EP-A2- 0 771 643
- WO-A1-2011/051798
- US-A- 5 397 043

## Description

### Field of the invention

The present invention regards a process for obtaining tyres for vehicle wheels. The present invention also refers to an apparatus implementing such process.

A tyre for vehicle wheels generally comprises a carcass structure including at least one carcass ply having axially opposite end flaps in engagement with respective annular anchoring structures, integrated in the areas generally referred to as "beads". A belt structure comprising one or more belt layers, arranged in radial superimposition with respect to each other and with respect to the carcass ply is associated to the carcass structure. A tread band made of elastomeric material, like other semi-finished products constituting the tyre is applied to the belt structure in a radially external position. Respective sidewalls made of elastomeric material are also applied in an axially outer position on the lateral surfaces of the carcass structure, each extending from one of the lateral edges of the tread band up to the respective annular structure for anchoring to the beads. After building the green tyre by assembling respective semi-finished products, a moulding and curing treatment aimed at determining the structural stabilisation of the tyre by cross-linking the elastomeric material as well as impress a desired tread pattern and any distinctive drawings at the sidewalls is generally executed.

The term "elastomeric material" is understood as indicating a composition comprising at least one elastomeric polymer and at least one reinforcing filler. Preferably, this composition further comprises additives such as cross-linking and/or plasticisation agents. Due to the presence of the cross-linking agent, this material can be cross-linked through heating, so as to form the product.

The term "elongated element" is understood as indicating an element made of elastomeric material in which a dimension is preponderant with respect to the others. Preferably, said elongated element is only made of elastomeric material or comprising further structural elements.

Preferably, the elongated element is made to form a strip with a flat section. Preferably, the further structural elements comprise one or more textile or metal reinforcement cords. These reinforcement cords are preferably arranged parallel to each other and they preferably extend along the longitudinal direction of the elongated element.

### Background of the invention

Document WO 2013/011396, on behalf of the Applicant, illustrates an apparatus for building tyres for vehicle wheels in which a forming drum is loaded at a time on a mobile shuttle on a guide along a deposition line. The shuttle is moved on the guide in the two running directions to bring it to stations for dispensing the elongated elements. At each of the dispensing stations, one or more of the elongated elements are advanced on conveyor surfaces, cut to size and wound on a radially outer surface to the forming drum carried by the shuttle.

Document US 5,720,837 illustrates an apparatus for supplying a belt layer on a rotary building drum. The apparatus comprises a supply reel which receives the material for the belt, means for unwinding the material from the reel, means for conveying the unwound material up to the building drum and cutting means for cutting the material in a belt layer. In addition, the apparatus comprises means for adjusting the shape of at least one side of the belt layer so as to confer it a reference shape. The adjustment method provides for laterally displacing a conveyor roller with respect to a subsequent conveyor belt during the passage of the material from one to the other. The roller conveyor further comprises guide rollers arranged on one side of the belt layer.

Document US 7,758,714 illustrates a method for obtaining a structural element of a tyre, according to which a continuous strip-like element reinforced with cords is cut into a plurality of strips of predefined length. The strips are arranged in succession on a transfer drum with the longitudinal edges partly superimposed to form the structural component which is then wound on a forming drum. Guide elements guide the longitudinal edges of the continuous strip-like element so that the latter is correctly positioned on the transfer drum.

Document EP0771643 discloses a method for transporting a band of rubber to further processing. Successive cross sections of the band of rubber, considered along the direction of travel, are deformed transversely to their path before reaching the further processing station. The deformation is such that one side of the band, forms an edge running parallel to the direction of travel, which is maintained until reaching the further processing station. Also disclosed is a conveyor table for the continuous conveying of band-formed rubber material rubber used to make a tyre by further processing.

### Summary

The Applicant observed that the continuous development of the tyres alongside the need for providing different models require providing apparatus, for example building apparatus, that are versatile, highly productive and simultaneously capable of processing the elongated elements in an automatic, repeatable and constant manner.

Elongated elements of various transversal sizes comprising elastomeric materials possibly reinforced using metal and/or textile cords are used for obtaining structural components for the production of the different types and sizes of tyres.

The Applicant observed that the quality of the final product depends on various factors, including the method of laying of the elongated elements on the forming drum. The Applicant deems that this laying method in turn depends on the correct management of the elongated elements by the devices arranged upstream of the drum, i.e. devices for supplying, conveying and cutting the elongated element itself.

The Applicant observed that in the devices of the type illustrated above, the elongated elements could be deformed (stretched, twisted, folded, crushed, etc.) when passing through the aforementioned devices and, thus deformed, reaching the final ends of the conveying surfaces and laid on the building drums improperly.

In addition, the Applicant observed that the aforementioned deformations negatively affect the spatial positioning of the elongated element on the conveying surfaces and thus the forming drum, during the laying and winding steps. In particular, the axial position thereof on the forming drum cannot be corrected and hence leading to the building of a noncompliant product with respect to the project specifications and/or required quality. This phenomenon is particularly significant in processes utilising elongated elements made of elastomeric material only, i.e. not comprising reinforcement elements therein.

The Applicant also observed that the lateral crushing of the elongated element tends to laterally compress the material causing the variation of its length which may jeopardize the correct joining in the elongated elements cut to size and joined on the forming drum. The surmounting degree of the head and trailing end actually varies from one laying operation to the other and this variability is difficult to control given that it depends on several factors

The Applicant also observed that these drawbacks are even more apparent and critical during the parallel laying of pairs of elongated elements cut to size on opposite sides with respect to an axial symmetry plane of the forming drum and intended to form pairs of tyre components, such as for example reinforcements under-belt, sidewalls, bead reinforcement layers (flippers), bead protection layers (chafers).

Actually, each of the aforementioned elongated elements, not only requires meeting uniform characteristics along its longitudinal extension but said characteristics should also be the same for both elongated elements of each pair.

Furthermore, the application position of the elongated elements of each pair should be symmetric to the axial symmetry plane of the forming drum. This with the aim of guaranteeing the radial symmetry of the tyre and the symmetry with respect to the equatorial plane of said tyre.

In this context, the Applicant felt the need to create an apparatus capable of processing pairs of elongated elements in an automatic, precise, repeatable and constant manner, with the aim of correctly laying them parallel on the forming drum and building high quality tyres, with uniform structural characteristics along its circumferential development and substantially symmetric with respect to its axial symmetry plane.

The Applicant felt the need for the parallel and precise guidance of elongated elements towards the forming drum as well as laying them on said forming drum pairs, thus reducing the deformation thereof to the minimum and trying to reproduce its project characteristics as much as possible.

The Applicant has finally found that these problems may be resolved by controlling the pressure exerted against only one of the longitudinal edges of each of the elongated elements by a respective lateral abutment guide, adapted to guide said elongated element along the respective supply path which leads to the forming drum, said pressure being controlled by exploiting part of the weight of each elongated element to constrain it against the respective lateral abutment guide.

More specifically, according to one aspect, the present invention regards a process for obtaining tyres for vehicle wheels.

Preferably, there is provided for advancing a first elongated element and a second elongated element, along respective supply paths, in which said first and second elongated element are longitudinally extended along said respective paths.

Preferably, there is provided for winding the first elongated element and the second elongated element on opposite portions, with respect to an axial centreline plane, of a forming drum.

Preferably, advancing comprises: laterally tilting at least one section of the first elongated element, until a respective longitudinal edge of said section of the first elongated element abuts by gravity against a respective lateral abutment guide and laterally tilting at least one section of the second elongated element, until a respective longitudinal edge of said section of the second elongated element abuts by gravity against a respective lateral abutment guide.

According to a different aspect, the present invention regards an apparatus for laying pairs of elongated elements on a forming drum in a process for obtaining tyres for vehicle wheels, comprising a pair of devices for dispensing a first and a second elongated element.

Preferably the apparatus comprises a first and a second conveyor for making said first and second elongated element advance towards a forming drum according to respective supply paths; wherein the forming drum is adapted to receive on a radially outer surface said first and second elongated element.

Preferably the apparatus comprises:
a first and a second device for the lateral alignment respectively of the first and second elongated element, each operatively active along the respective supply path and each comprising:
at least one support surface configured for receiving in abutment a lower face of the respective first or second elongated element and supporting part of the weight of said first or second elongated element;
at least one lateral abutment guide.

Preferably, at least part of said support surface is tilted towards the lateral abutment guide, in order to make a longitudinal edge of the respective first or second elongated element abut by gravity against said lateral abutment guide.

The Applicant deems that, due to the weight of the elongated element itself, the later tends to position itself against the lateral abutment guide and slide therealong.

Furthermore, the applicant deems that the part of the weight of each elongated element that draws it towards the respective lateral abutment guide is sufficient to maintain it against said guide thus guaranteeing the precise positioning thereof, without generating an excessive friction force between said lateral abutment guide and the longitudinal edge of the elongated element at contact therewith.

Furthermore, the Applicant deems that, given that the robustness of the elongated element increases proportionally to its weight, the force (fraction of said weight) which pushes it against the lateral abutment guide always corresponds to this robustness, i.e. it exerts an amount of pressure such not to damage it and/or alter its characteristics.

The present invention, in at least one of the aforementioned aspects, may have one or more of the preferred characteristics described hereinafter.

Preferably, the elongated element slides against the lateral abutment guide by gravity. In other words, the lateral movement of the elongated element is not hindered by any element (except by the lateral abutment guide) and it is thus free to move against the respective lateral abutment guide solely under the action of its weight.

Preferably, said sections of the first elongated element and the second elongated element are tilted by respective tilt angles. Preferably each tilt angle is comprised between about 1° and about 15°, more preferably comprised between about 5° and about 10°. These intervals guarantee the constant and continuous abutment of the longitudinal edge of each elongated element against the respective lateral abutment guide without the risk of deforming them detrimentally.

Preferably, each of the elongated elements has, along the supply path thereof, cross section profiles that are parallel to each other except at said section.

Preferably each tilt angle is delimited between the chord line of each profile of said section and the chord line of a corresponding hypothetical profile parallel to said profiles parallel to each other. In other words, each of the elongated elements is twisted at the respective section tilted.

Preferably, each tilt angle is delimited between the chord line of each cross section profile of said section of the elongated element and a horizontal plane. Preferably, said sections of the first elongated element and the second elongated element are tilted in opposite directions of rotation.

In one embodiment, said sections of the first elongated element and the second elongated element are tilted towards each other. In this case, the abutment guides are positioned in an internal position and the elongated elements are laid on the forming drum at axially internal reference lines with respect to the opposite portions on which they are wound.

In one embodiment, said sections of the first elongated element and the second elongated element are tilted towards opposite sides. In this case, the lateral abutment guides are positioned in an external position and the elongated elements are laid on the forming drum at axially external reference lines with respect to the opposite portions on which they are wound.

Preferably, each of said first and second lateral alignment device comprises a plurality of support rollers; wherein a radially peripheral surface of the support rollers defines said at least one support surface; wherein at least one of said support rollers has a rotation axis tilted to define the tilted part of the support surface.

Preferably, supplying comprises: sliding the lower face of the first and second elongated element in abutment on a plurality of support rollers defining said support surfaces; wherein at least one of said support rollers has a rotation axis tilted by a tilt angle to define the tilted part of the support surface.

Preferably, the tilted rotation axis delimits a tilt angle with respect to mutually parallel rotation axes of the other support rollers.

Preferably, the tilt angle is delimited between said tilted rotation axis and a hypothetical line intersecting said tilted rotation axis and parallel to the mutually parallel rotation axes. In other words, the tilt angle is measured with respect to mutually parallel rotation axes of the other support rollers.

Preferably, the tilted rotation axis delimits a tilt angle with respect to a horizontal plane and, preferably, the other support rollers have rotation axes parallel to said horizontal plane.

Preferably, said tilt angle is comprised between about 1° and about 15°, more preferably comprised between about 5° and about 10°. As specified above, these intervals guarantee the constant and continuous abutment of the longitudinal edge of each elongated element against the respective lateral abutment guide without risking deforming them.

Preferably, there is provided for varying the tilt angle in order to change a pressure exerted by the elongated element against the respective lateral abutment guide.

Preferably, each lateral alignment device comprises adjustment devices mounted on a support frame and operatively active on the support rollers in order to vary the tilt thereof.

Preferably, the adjustment devices comprise adjustment guides and the support rollers comprise shafts; wherein ends of the shafts are engaged in said adjustment guides.

Actually, changing said tilt angle allows changing the gravity force component which maintains the elongated element against the respective abutment guide.

Preferably, the support rollers are idle.

Preferably, the support rollers are driven in rotation by the respective first or second elongated element. In other words, each elongated element slides in abutment on a radially outer portion of the respective support rollers and drives them in rotation.

Preferably, the support rollers are of omnidirectional type. The omnidirectional rollers are capable of sliding the elongated element abutting thereon in all directions and with low friction. In other words, the support rollers do not represent a limitation for the movement of the elongated element thereon.

Preferably, each of the support omnidirectional rollers comprises a plurality of axially adjacent annular elements and each is free to rotate around a main common rotation axis perpendicular to the direction of supply.

Preferably, each of the annular elements comprises a plurality of rollers arranged mutually approached along the circumferential development of the respective annular element and each free to rotate around a respective axis perpendicular to the common main rotation axis.

Each of the elongated elements slides on the support rollers in the longitudinal direction and it is also free to move laterally under the action of its weight which acts in the aforementioned tilted section (preferably formed by one or more tilted rollers) up to abutting against the respective lateral abutment guide.

Preferably, the support rollers are arranged in a manner such to define a curved and convex surface. The radially peripheral surfaces of the support rollers are tangential with respect to an ideal curved and convex surface defining said support surface. Thus, the elongated element does not lie on only one plane but on a plurality of successive planes, each interposed between a support roller and the ensuing support roller.

Preferably, each of said first and second lateral alignment device comprises a first plurality of support rollers arranged in succession with axes parallel to a horizontal plane and a second plurality of support rollers arranged in succession with tilted axes.

Preferably, with respect to a supply direction, said second plurality of support rollers is placed downstream of said first plurality of support rollers.

Preferably, each lateral alignment device is arranged between the respective dispensing device and the respective conveyor.

Preferably, each lateral abutment guide comprises a fixed wall, along the supply direction.

Each wall has an abutment surface for the respective longitudinal edge of the elongated element. The wall is continuous and thus guarantees a uniform distribution of the pressure interacting between the wall and said longitudinal edge.

Preferably, the lateral abutment guide comprises a plurality of candle-like rollers arranged in sequence along a section of the supply path.

The candle-like rollers avoid the sliding of the edge of the elongated element against the lateral abutment guide, reducing the risk of damaging it.

Preferably, the apparatus comprises: a cutting unit comprising at least one cutting blade operatively active on the supply paths upstream of the forming drum.

Preferably, the cutting unit comprises a counter-blade configured for receiving the elongated element in abutment during the cutting.

Preferably, the counter-blade is mobile between a raised position, in which it supports the elongated element while the blade performs the cutting, and a lowered position, in which it remains spaced from the respective elongated element.

Preferably, the apparatus comprises: detection devices for detecting the presence of the heads of the elongated elements.

Preferably, the detection devices are operatively active on the two supply paths and in proximity of the cutting unit.

Preferably, each of the two detection devices comprises at least one photocell.

Preferably, the apparatus comprises a control unit operatively connected at least to the detection devices, to the cutting unit and to motors operating on the first and on the second conveyor.

Preferably, there is provided for mutually aligning a head end of the first elongated element and a head end of the second elongated element before winding them on the forming drum.

Thus, there is the certainty that the subsequent advancement of the conveyor belts shall carry equally long pieces on the forming drum.

Preferably, aligning comprises: longitudinally and independently moving the first elongated element and the second elongated element until each of the heads is brought to a predefined longitudinal position.

Preferably, laying comprises: cutting to size a piece of predefined length from the first elongated element, cutting to size a piece of predefined length from the second elongated element and winding the pieces on the forming drum.

Preferably, after each cut, the first elongated element and the second elongated element arranged upstream of the previously cut pieces are moved longitudinally and independently against each other until a head end of the first elongated element and a head end of the second elongated element are aligned mutually.

As a matter of fact, after each cut said head ends tend to be misaligned due to the release of internal tensions (due to previous drawing and/or reeling operations) in the elastomeric material and the ensuing variation of different length of said elongated elements.

Preferably, the alignment is attained when detection devices detect the presence of said head end.

Preferably, after the alignment, there is provided for simultaneously advancing the first elongated element and the second elongated element by a predefined length, cutting to size a piece of said predefined length from the first elongated element, cutting to size a piece of said predefined length from the second elongated element, winding the pieces on the forming drum.

Preferably, the alignment is executed after each cut.

Preferably, after each cut and before performing the alignment, the first elongated element and the second elongated element arranged upstream of the previously cut pieces are receded until their head ends are brought to the conveyor belt. This prevents the head ends of said elongated element from collapsing when no longer supported by the respective counter-blade.

Preferably, it is provided for advancing the first and the second conveyor until the head ends of said first and second elongated element are simultaneously laid on the forming drum.

Preferably, at the end of the winding on the forming drum, a head end of the elongated element cut to size is joined to a trailing end of the elongated element cut to size.

Further characteristics and advantages shall be more apparent from the detailed description of a preferred non-exclusive embodiment of an apparatus and a process for obtaining tyres for vehicle wheels according to the present invention.

### Description of the drawings

This description shall be outlined hereinafter with reference to the attached drawings, solely provided as a non-limiting example, wherein:
- figure 1 shows a top schematic view of an apparatus for building tyres;
- figure 2 is a lateral elevation view of a group part of the apparatus of figure 1;
- figure 3 is a top view of the group of figure 2;
- figure 4 illustrates two elements of the group of figures 2 and 3 seen according to arrow A of figure 2;
- figure 4A illustrates a front view of a detail of figure 4;
- figure 5 is a lateral elevation view of the elements of figure 4 with some parts removed for the better view of others;
- figure 6 illustrates a top view of the elements of figure 4;
- figure 6A illustrates a detail of the elements of figures 4, 5 and 6;
- figures 7A - 7F illustrate a top view of the portion of the group of figure 2 in respective operating conditions;
- figure 8 is a radial semi-section of a tyre for vehicle wheels built with the process and the apparatus of the present invention.

### Detailed description

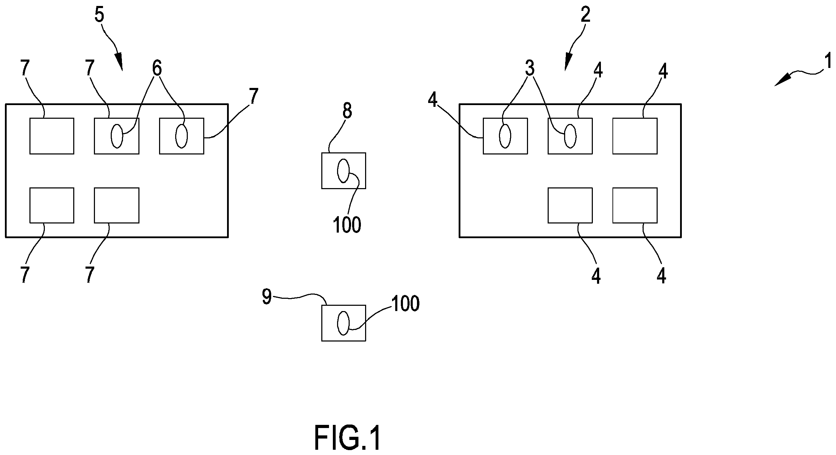

With reference to figure 1, an apparatus for obtaining tyres 100 for vehicle wheels according to the present invention was indicated in its entirety with 1.

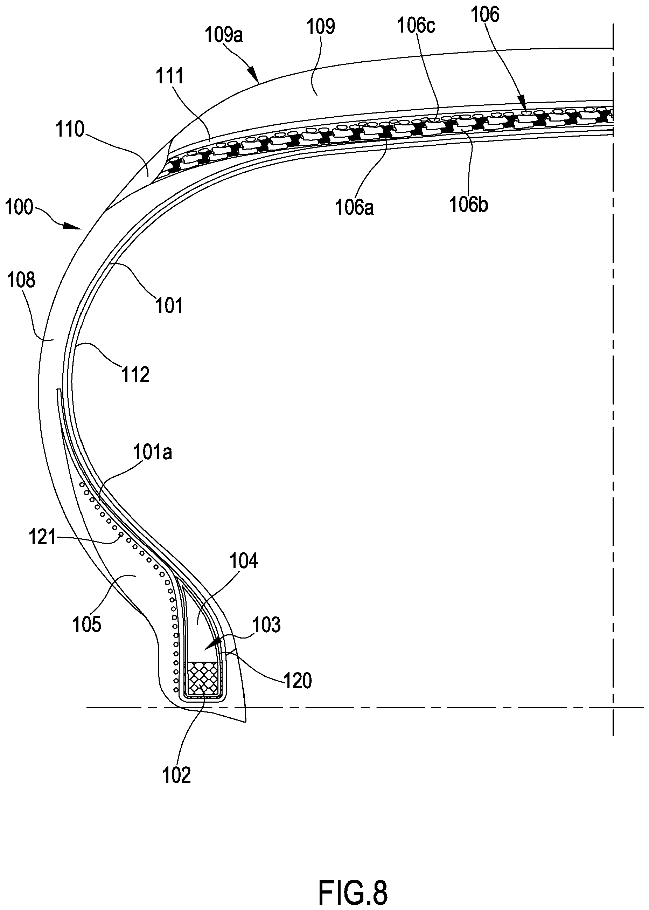

A tyre 100, made with said apparatus 1 and according to the method and the process according to the present invention, is illustrated in figure 8 and it comprises at least one carcass structure, comprising at least one carcass layer 101 having respectively opposite end flaps engaged with respective annular anchoring structures 102, called bead cores, possibly associated to a bead filler 104. The area of the tyre comprising the bead core 102 and the bead filler 104 forms a bead structure 103, intended to anchor the tyre on a corresponding mounting ring (not illustrated).

Each bead structure is associated to the carcass structure by folding the opposite lateral edges of the at least one carcass layer 101 backwards around the annular anchoring structure 102, so as to form the so-called carcass turn-ups 101a.

An anti-abrasive strip 105 made with elastomeric material may be arranged in an outer position of each bead structure 103.

A belt structure 106 comprising one or more belt layers 106a, 106b arranged in radial superimposition with respect to each other and with respect to the carcass layer, having metal or textile reinforcement cords, is associated to the carcass structure. These reinforcement cords may have an intertwined orientation with respect to a direction of circumferential extension of the tyre 100. The term "circumferential" is used to indicate a direction generally facing the direction of rotation of the tyre. At least one zero degree reinforcement layer 106c, commonly known as "belt 0°", which generally incorporates a plurality of reinforcement cords, typically textile cords, coated with an elastomeric material and oriented in a substantially circumferential direction, i.e. forming an angle of few degrees (for example an angle between about 0° and 6°) with respect to the equatorial plane of the tyre may be applied in a radially more outer position with respect to the belt layers 106a, 106b.

A tread band 109 made of elastomeric compound is applied in a radially outer position with respect to the belt structure 106, same case applying to other semi-finished elements forming the tyre 100. Respective sidewalls 108 made of elastomeric compound are also applied in axially outer position on the lateral surfaces of the carcass structure, each extending from one of the lateral edges of the tread 109 up to the respective bead structure 103. The tread band 109 has a rolling surface 109a intended to come to contact with ground in a radially outer position. Circumferential grooves, connected by transverse notches so as to define a plurality of plugs of various shapes and sizes distributed on the rolling surface 109a, are generally obtained in this surface 109a which will be shown smooth in figure 9 for the sake of simplicity.

An underlayer 111 may be possibly arranged between the belt structure 106 and the tread band 109. A strip made of elastomeric material 110, commonly referred to as "mini-sidewall", may possibly be present in the connection area between the sidewalls 108 and the tread band 109, this mini-sidewall generally being obtained by co-extrusion with the tread band 109 and allowing an improvement of the mechanical interaction between the tread band 109 and the sidewalls 108. Preferably the end portion of the sidewall 108 directly covers the lateral edge of the tread band 109.

In case of tubeless tyres there may be provided for, in a radially inner position with respect to the carcass layer 101, a rubber layer 112, generally known as "liner", which confers the required impermeability to the inflation air of the tyre.

The rigidity of the tyre sidewall 108 may be improved by providing the tyre bead structure 103 with a reinforcement layer 120 generally known as "flipper" or additional strip-like insert. The "flipper" 120 is a reinforcement layer which is wound around the respective annular anchoring structure 102 and the bead filler 104 so as to at least partly surround them, said reinforcement layer being arranged between the at least one carcass layer 101 and the bead structure 103.

The "flipper" is usually at contact with said at least one carcass layer 101 and said bead structure 103. The "flipper" 120 typically comprises a plurality of metal or textile cords (for example made of aramid or rayon) embedded in a cross-linked elastomeric material.

The tyre bead structure 103 may comprise a further protection layer which is generally referred to as "chafer" 121 or protection strip and which serves to increase the rigidity and integrity of the bead structure 103. The "chafer" 121 usually comprises a plurality of cords embedded in a cross-linked elastomeric material. The cords are generally made of textile material (for example aramid or rayon) or metal material (for example steel cords).

The aforementioned tyre components 100 are obtained on one or more forming drums moving said drums between different stations for dispensing elongated elements at each of which special devices apply the aforementioned elongated elements on the drum/s.

The apparatus 1, illustrated schematically in its entirety in the attached figure 1, comprises a carcass building line 2, at which forming drums 3 are moved between various stations 4 for dispensing elongated elements predisposed to form, on each forming drum 3, a carcass sleeve comprising carcass plies 101, the liner 112, the annular anchoring structures 102, the "flippers" 120, the "chafers" 121 and possibly at least one part of the sidewalls 108.

Simultaneously, in a line for building outer sleeves 5, one or more auxiliary forming drums 6 are sequentially moved between various work stations 7 predisposed to form on each auxiliary drum 6 an outer sleeve, comprising at least the belt structure 106, the tread band 109, the anti-abrasive strips 105 and possibly at least one part of the sidewalls 108.

In addition, the system 1 comprises an assembly station 8 at which the outer sleeve is coupled to the carcass sleeve, to define the built green tyre 100.

The built green tyres 100 are lastly transferred to at least one conformation, moulding and curing unit 9.

At least one from among the dispensing stations 4 and work stations 7 is configured for cutting to size pairs of elongated elements 10a, 10b each comprising an elastomeric material, to wind them around one of the forming drums 3, 6, laying it on a surface 3a, 6a radially external to said forming drum 3, 6 while the latter rotates around its rotation axis "X-X" to join a head end "H" of each said elongated elements 10a, 10b cut to size with a trailing end of the same elongated element 10a, 10b.

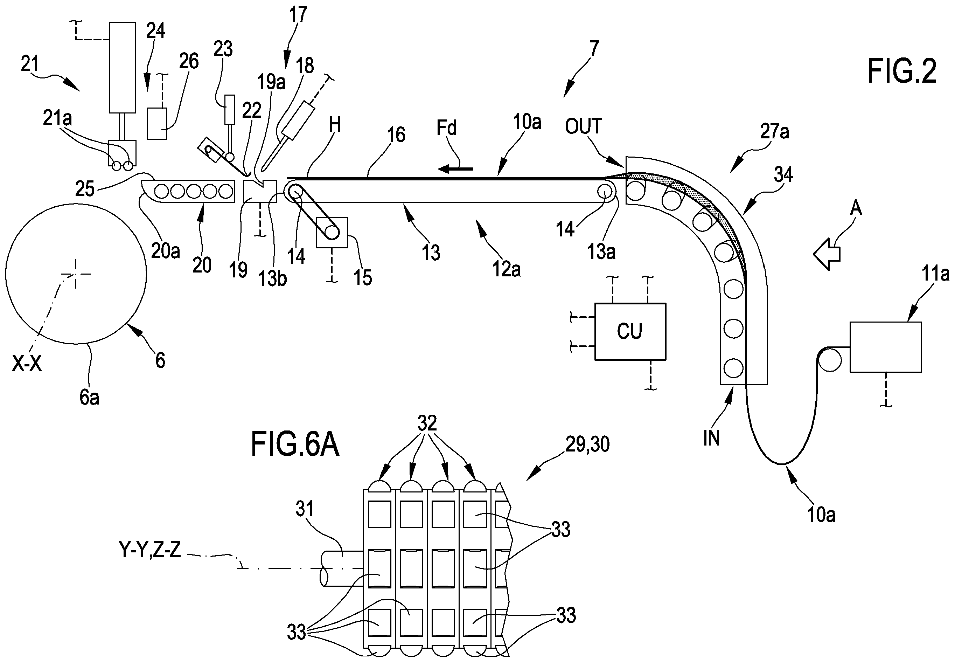

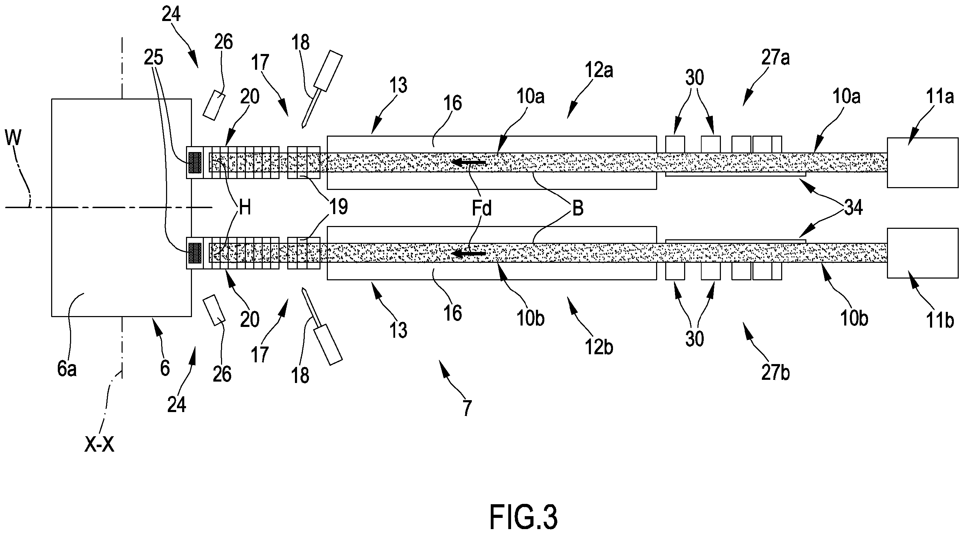

Figures 2 and 3 illustrate a work station 7 designated to dispense and lay in parallel on the forming drum 6 a first elongated element 10a and a second elongated element 10b intended to form, for example, the sidewalls 108.

In the illustrated non-limiting embodiment, the work station 7 delimits a first and a second supply path parallel to each other. The first supply path is provided with a first dispensing device 11a and with a first conveyor 12a. The second supply path is provided with a second dispensing device 11b and with a second conveyor 12b (figure 3).

The following description shall make reference to the elements of only one of said two paths, the other being symmetric.

The dispensing device 11a, 11b was schematically represented in the attached figures and it may comprise a reel-holder (not illustrated) which receives, wound in a reel, one of the continuous elongated elements 10a, 10b (intended to form, once unwound and cut to size, one of the two sidewalls 108).

The conveyor 12a, 12b comprises a conveyor belt 13 wound around a pair of pulleys 14 at least one of which is connected to a driving motor 15. An upper branch 16 of the conveyor belt 13 is intended to receive, support and make one of the elongated elements 10a, 10b coming from the respective dispensing device 11a, 11b to advance. An abutment surface of the conveyor belt 13 is made of elastomeric material so as to generate a friction force with the respective elongated element 10a, 10b which prevents inadvertent lateral and longitudinal movements thereof (with respect to said abutment surface).

A first end 13a of the conveyor belt 13 is faced towards the dispensing device 11a, 11b and a second end 13b of said conveyor belt 13, opposite to the first, is faced towards the forming drum 6.

The work station 7 further comprises a cutting unit 17 placed downstream of the conveyor 12a, 12b and in proximity of the second end 13b of the conveyor belt 13.

The cutting unit 17 comprises a cutting blade 18 and a counter-blade 19. The counter-blade 19 is defined by a base provided with a notch 19a and configured for receiving in abutment the elongated element 10a, 10b during the cutting. The cutting blade 18 is positioned above the counter-blade 19. An end of the cutting blade 18 is configured to be engaged in the notch 19a and transversely cut the elongated element 10a, 10b. The counter-blade 19 is mobile between a raised position, in which it supports the elongated element 10a, 10b while the blade 18 performs the cutting, and a lowered position, in which it remains spaced from the respective elongated element 10a, 10b.

Downstream of the cutting unit 17 there is arranged a support roller unit 20 and at a final end 20a of the support roller unit 20 there is arranged a pressing member 21 provided with pressing rollers 21a. The support roller unit 20 supports the elongated element 10a, 10b cut to size during the winding of the same on the forming drum 6. The pressing member 21 presses the elongated element 10a, 10b against the outer surface 6°, during the winding thereof determined by the rotation of the forming drum 6 around the rotation axis "X-X" thereof.

Above the counter-blade 19 there is positioned a holding member 22 driven, for example, by a pneumatic cylinder 23. The holding member 22 is moveable between a position spaced from the counter-blade 19 and an approached position in which it presses and holds the elongated element 10a, 10b against the counter-blade 19 during the performance of the cut.

In proximity of the final end 20a of the support roller unit 20 there is arranged a detection device 24 which comprises a reflecting surface 25 arranged on the support roller unit 20 and a photocell 26 arranged above the support roller unit 20 and directed towards the reflecting surface 25.

The work station 7 further comprises a first and a second lateral alignment device 27a, 27b, each arranged upstream of the respective conveyor 12a, 12b and in proximity of the first end 13a of the conveyor belt 13. Each lateral alignment device 27a, 27b is configured to guide the respective elongated element 10a, 10b towards the conveyor 12a, 12b so that it maintains a transverse predefined position (with respect to a supply direction "Fd" of said respective elongated element 10a, 10b).

The lateral alignment device 27a, 27b comprises a fixed support frame 28, schematically represented, (for example integral with a framework of the conveyor 12 and/or resting on the ground). The support frame 28 has a first lateral shoulder 28a and a second lateral shoulder 28b. On the support frame 28 there are mounted support rollers 29, 30 free to rotate (idle) around a respective rotation axes "Y-Y", "Z-Z".

Not all rotation axes "Y-Y", "Z-Z" of the support rollers 29, 30 lie on the same plane but they define a curved surface. Each of the support rollers 29, 30 is pivoted on lateral shoulders 28a, 28b of one of said support frame 28. The support rollers 29, 30 have respective portions of their radially outer surface on which lower faces of the elongated elements 10a, 10b are intended to rest and thus identify surfaces for supporting said elongated elements 10a, 10b. In the illustrated embodiment, such surfaces are substantially curved and convex. Each curved surface subtends an about-90° arc.

The support rollers 29, 30 are divided into two groups. A first group or first plurality of support rollers 29 has rotation axes "Y-Y" parallel to each other and parallel to a horizontal plane "P". A second group or second plurality of support rollers 30 has rotation axes "Z-Z" tilted with respect to the horizontal plane "P" and also tilted with respect to the rotation axes "Y-Y" of the first group of support rollers 29. Thus, the rollers 30 of the second group define a tilted part of the support surface.

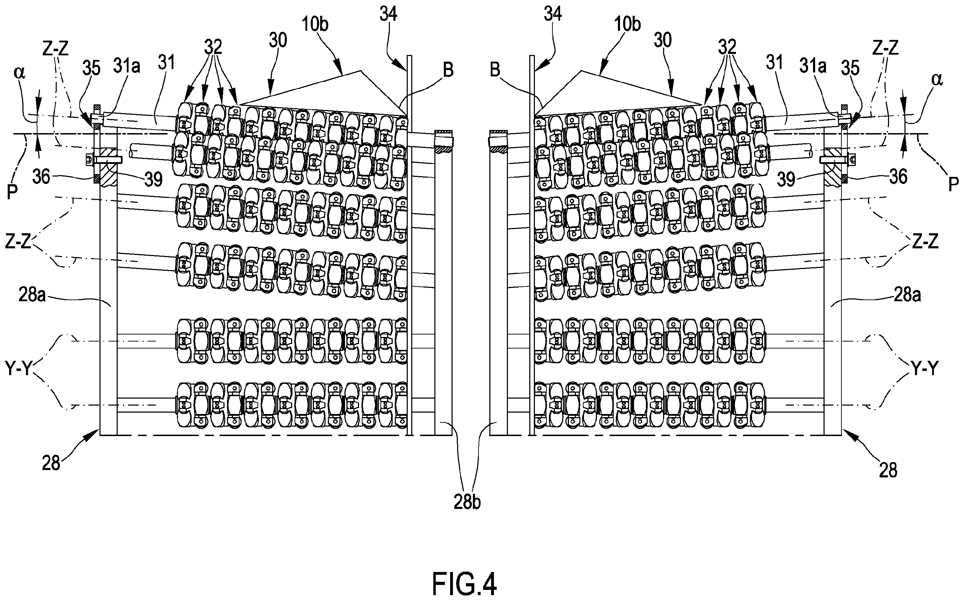

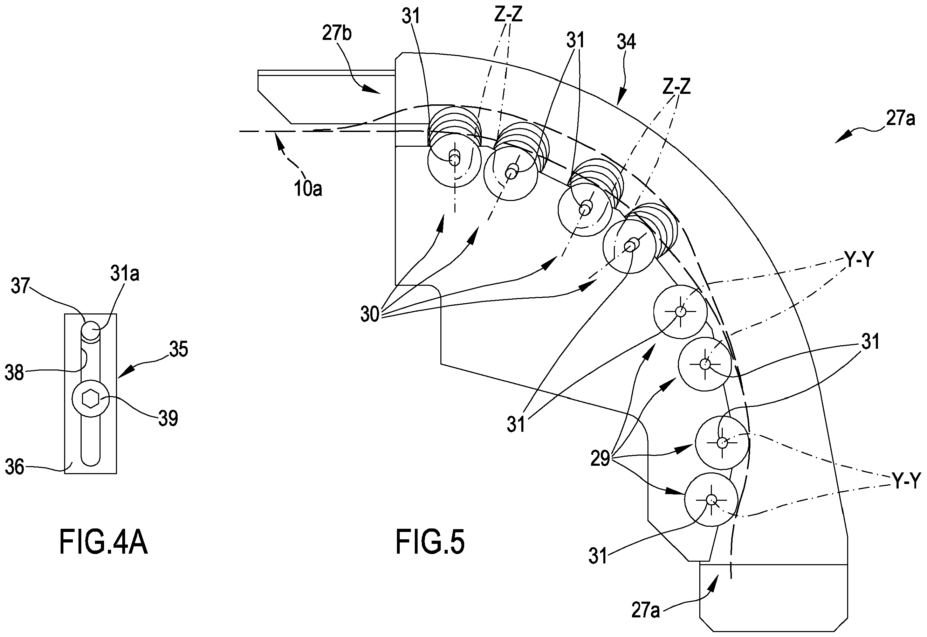

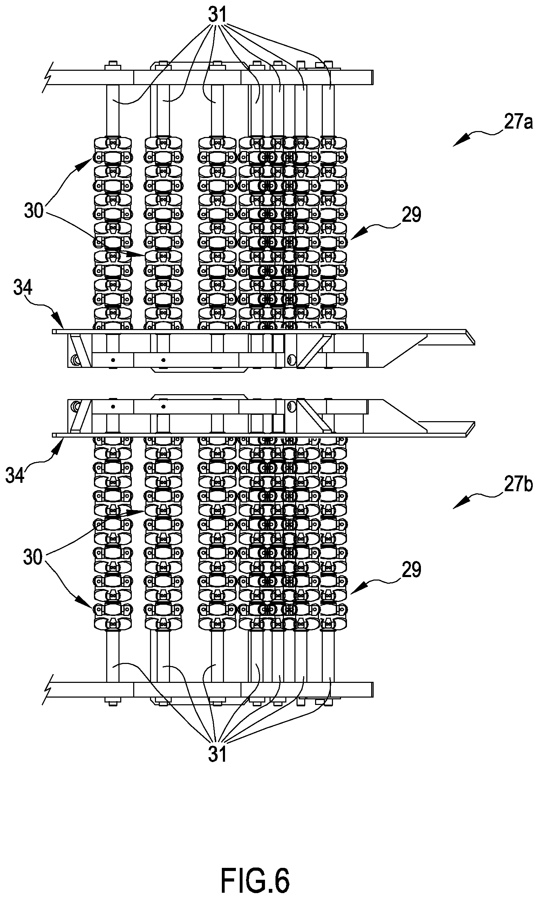

Each support roller 29, 30 comprises a shaft 31 which extends along the respective rotation axis "Y-Y", "Z-Z" and a plurality of annular elements 32 coaxial to the shaft 31 and approached axially (figures 4, 6, 6A). Said annular elements 32 are free to rotate on the shaft 31 independently with respect to each other. In the lateral elevation view of figure 5, the ends of the shafts 31 are arranged on a circular arc.

Each support roller 29, 30 is of the omnidirectional type. Each of the annular elements 32 supports a plurality of rollers 33 mutually approached along the circumferential extension of the respective annular element 32 and each free to rotate around a respective axis perpendicular to the rotation axis "Y-Y", "Z-Z" (figure 6A).

The lateral alignment device 27a, 27b is oriented in the space so that the elongated element 10a, 10b enters through an inlet "IN" of said lateral alignment device 27a, 27b from the bottom upwards and exits horizontally from an outlet "OUT" of the same lateral alignment device 27a, 27b. The outlet "OUT" is aligned with the subsequent conveyor 12a, 12b. The first group of support rollers 29 is arranged at the inlet "IN". The second group of support rollers 30 is arranged at the outlet "OUT".

The lateral alignment device 27a, 27b comprises a lateral abutment guide 34 placed on a respective side of at least one section of the respective supply path which is handled by said lateral alignment device 27a, 27b. The lateral abutment guide 34 is defined by a fixed wall (which does not move in the supply direction "F_{d}"). In a variant embodiment (not illustrated), the lateral abutment guide 34 comprises, instead of the fixed wall, a plurality of candle-like rollers arranged in sequence along a section of the supply path.

As observable in figure 4, such lateral abutment guide 34 is placed on the side of the respective supply path towards which the support rollers 30 of the second group are tilted. In other words, the support surface portion defined by the support rollers 30 of the second group is tilted towards the lateral abutment guide 34. In the illustrated non-limiting embodiment, the rotation axis "Z-Z" of the support rollers 30 of the second group delimits a tilt angle "α" with respect to a horizontal plane "P" comprised between about 5° and about 10°. Such tilt angle "α" may even not be the same for all rollers 30 of the second group.

Adjustment devices 35 allow adjusting said tilt angle "α". The adjustment devices 35 comprise adjustment guides operatively engaged at ends 31a of the shafts 31 opposite to those proximal to the lateral abutment guide 34. In the illustrated example (figures 4 to 4A), each of the adjustment guides 35 comprises a plate 36 within which there is obtained an opening 37 which houses an end 31a of one of the shafts 31. In addition, the plate 36 has a slot 38 traversed by a locking screw 39 in turn fixed to the framework 28. Moving the plate 36 with respect to the screw 39 (by sliding the screw 39 in the slot and then locking it) allows changing the tilt of the respective shaft 31. The variation of the tilt angle allows changing the pressure exerted by the elongated element 10a, 10b against the respective lateral abutment guide 34.

In the illustrated embodiment, the two lateral alignment devices 27a, 27b handled by the two parallel supply paths have axially inner and approached lateral abutment guides 34 (as observable in figures 3 and 4 both lateral abutment guides 34 lie between the two supply paths) and the rollers 30 of one of the devices 27a, 27b are tilted towards the rollers of the other.

A control unit "CU" is operatively connected to the different units of both supply paths of the work station 7 thus controlling them and, in particular, to the driving motor 15, the cutting blade 18 and the counter-blade 19 of the cutting unit 17, the detection device 24, the pneumatic cylinder 23 of the holding member 22, the pressing member 21, the dispensing device 11a, 11b, the motor (not illustrated) which drives the forming drum 6 in rotation.

The present invention also regards a process for guiding an elongated element in a process for building tyres for vehicle wheels.

In use and according to the process according to the invention, at the beginning of a cycle, each of the two elongated elements 10a, 10b coming from the respective dispensing devices 11a, 11b lies in abutment on the support rollers 29, 30 of the respective lateral alignment device 27a, 27b and on the respective conveyor belt 13. The conveyor belt 13 is standstill. The surface of the conveyor belt 13 is such that, due to friction, the elongated element 10a, 10b remains anchored on said conveyor belt 13 without slipping.

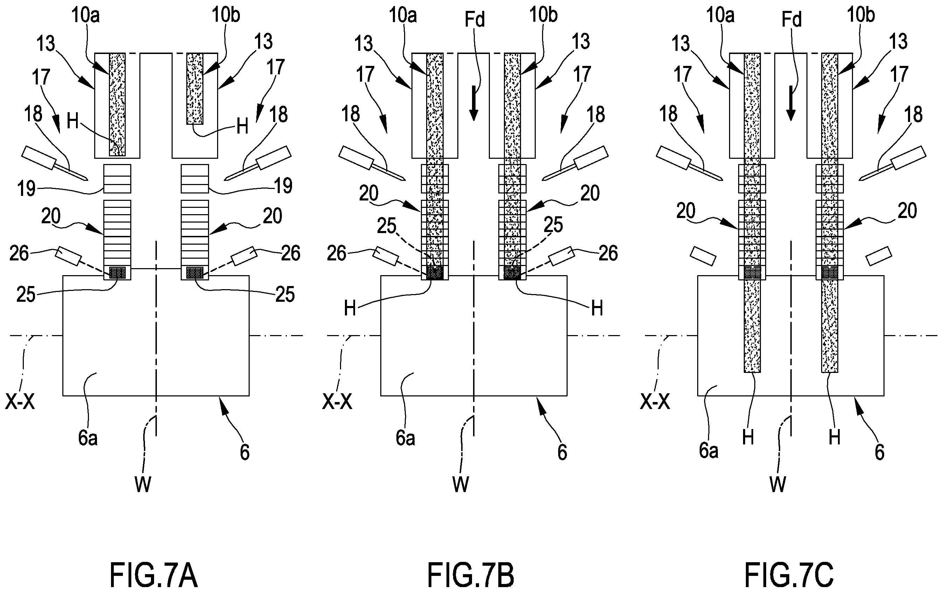

The head ends "H" of the elongated elements 10a, 10b rest on the aforementioned conveyor belt 13. As observable in figure 7A, due to the elastic/plastic properties of the elongated elements 10a, 10b and the tensions to which they are subjected to upstream of the conveyor belts 13 (for example due to drawing and/or reeling operations), said head ends "H" usually lie in different longitudinal positions, i.e. they are not mutually aligned.

More in detail, after cutting and over the period of time that passes between one winding operation and the next (usually a few minutes), the elongated elements 10a, 10b which are still on the conveyors 13 and which shall be cut and wound only subsequently, tend to recover their length due to tensions inside the material. This implies that the two heads "H" of the two elongated elements 10a, 10b are no longer mutually aligned.

At the beginning of the cycle, the control unit "CU" independently controls the driving motors 15 of the conveyor belts 13 so that the belts advance until they bring the head ends "H" of each of the elongated elements 10a, 10b to the final end 20a of the respective support roller unit 20. When one of the head ends "H" reaches said final end 20a and covers the reflecting surface 25, the respective photocell 26 detects the presence thereof and stops the respective motor 15 (independently from the other motor 15). Thus, the head ends "H" are aligned to each other (with respect to a line parallel to the rotation axis "X-X" of the forming drum 6) on the respective final ends 20a (figure 7B).

At this point the conveyor belts 13 are simultaneously advanced until they bring said head end "H" on the forming drum 6 where the pressing member 21 makes them adhere to the radially outer surface 6a while the drum 6 is still stationary (figure 7C).

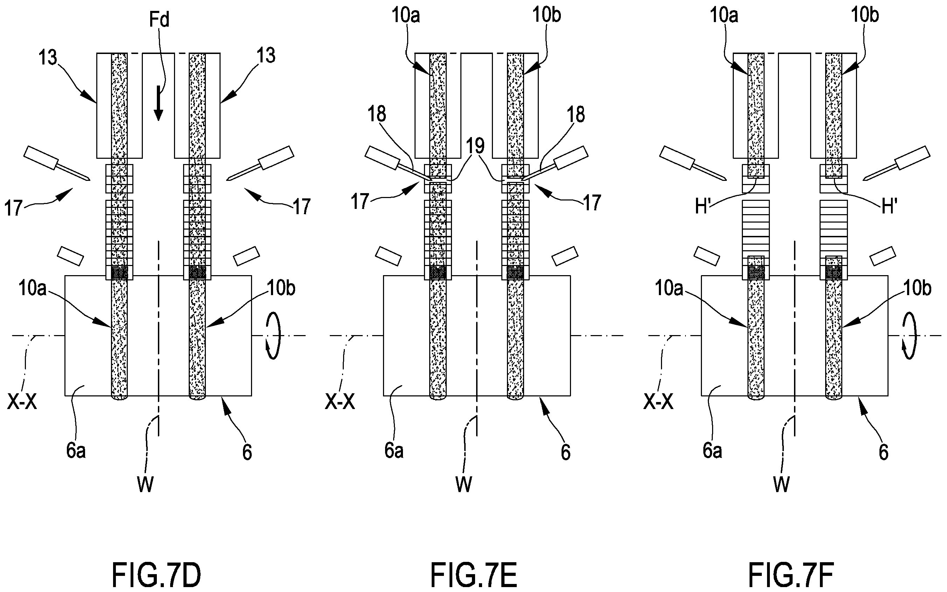

Subsequently, the forming drum 6 is driven in rotation simultaneously with the movement of the conveyor belts 13 for partly winding (up to about 7/8 of a turn) the elongated elements 10a, 10b around said forming drum 6 and providing a portion of predefined length (substantially corresponding to the circumferential extension of the radially outer surface 6a of the forming drum 6) of each of the elongated elements 10a, 10b downstream of the respective cutting unit 17 (figure 7D).

The forming drum 6 and the conveyor belts 13 are subsequently stopped and the control unit "CU" controls the pneumatic cylinder 23 of the holding member 22 so that it is brought against the elongated element 10a, 10b to hold it. The cutting devices 17 cut the two pieces (figure 7E) to size.

Upon completing the cutting, the holding members 22 free the respective first and second elongated element 10a, 10b and the forming drum 6 is once again driven in rotation until it completes the winding of the previously cut two pieces and join the head ends "H" with the respective trailing end (figure 7F). For this purpose, in order to consolidate the joint, the pressing members 21 increase the thrust pressure and, preferably, the control unit "CU" drives the forming drum 6 in an alternating rotary (oscillating) motion around the joining position itself.

The elongated elements 10a, 10b, arranged upstream of the pieces being laid, that remain in the conveyors 12a, 12b are partly receded until they bring their head ends "H'" on the second ends 13b of the conveyor belts 13 so as to prevent them from projecting cantilevered and collapsing when the counter-blade 19 is lowered after each cut. Such head ends "H'" will tend to be misaligned, leading to the recurrence of the situation of figure 7A and the cycle will be repeated once again.

During the advancement steps, the elongated elements 10a, 10b slide on the support rollers 29, 30 of the respective lateral alignment devices 27a, 27b in the supply direction "Fd". In particular it is the very elongated elements 10a, 10b that, driven by the conveyor belts 13, drive the annular elements 32 in idle rotation on the shafts 31.

While the elongated elements 10a, 10b slide on the support rollers 30 of the respective second groups (with the rotation axes "Z-Z" tilted), the weight thereof makes the longitudinal edges "B" thereof rest against the lateral abutment guides 34 (figures 3 and 4), thus fixing a precise transverse position which is maintained on the conveyor belts 13 and on the forming drum 6. Being of the omnidirectional type, the support rollers 29, 30 follow (they do not hinder) the transverse movement of the elongated elements 10a, 10b and the continuous abutment of the longitudinal edges "B" thereof against the respective lateral abutment guides 34.

The sections of the elongated elements 10a, 10b that pass on the support rollers 30 of the second group are tilted laterally towards the respective lateral abutment guides 34. The aforementioned tilt angle "α" is also delimited between the chord line of each cross section profile of said section of the elongated element and a horizontal plane "P".

Thus, the first elongated element 10a and the second elongated element 10b are wound on opposite portions, with respect to a clearly defined centreline plane "W", of the forming drum 6 with a precise transverse position.

The continuous abutment of the longitudinal edges "B" of the elongated elements 10a, 10b against the respective lateral abutment guides 34 is also maintained in the elongated elements 10a recession steps, 10b performed after each cut.

## Claims

1. Process for obtaining tyres for vehicle wheels, comprising:
advancing a first elongated element (10a) and a second elongated element (10b) along respective supply paths, wherein said first and second elongated element (10a, 10b) are longitudinally extended along said respective paths;
winding the first elongated element (10a) and the second elongated element (10b) on opposite portions - opposite with respect to an axial centreline plane (W) - of a forming drum (6);
wherein advancing comprises:
laterally tilting at least one section of the first elongated element (10a), until a respective longitudinal edge (B) of said section of the first elongated element (10a) abuts by gravity against a respective lateral abutment guide (34), and laterally tilting at least one section of the second elongated element (10b), until a respective longitudinal edge (34) of said section of the second elongated element (10b) abuts by gravity against a respective lateral abutment guide (34).

2. Process as claimed in the preceding claim, wherein said sections of the first elongated element (10a) and the second elongated element (10b) are tilted by respective tilt angles (α); wherein each tilt angle (α) is delimited between a chord line of each cross section profile of said section of the elongated element (10a, 10b) and a horizontal plane.

3. Process as claimed in the preceding claim, wherein each of the elongated elements (10a, 10b) has, along the supply path thereof, cross section profiles that are parallel to each other except at said section.

4. Process as claimed in one of the claims 2 or 3, wherein each tilt angle (α) is comprised between 1° and 15°.

5. Process as claimed in one of the claims 2 to 4, comprising: varying the tilt angle (α) in order to change a pressure exerted by the elongated element (10a, 10b) against the respective lateral abutment guide (34).

6. Process as claimed in one of the preceding claims, wherein said sections of the first elongated element (10a) and the second elongated element (10b) are tilted in opposite directions of rotation.

7. Process as claimed in one of the preceding claims, comprising: mutually aligning a head end (H) of the first elongated element (10a) and a head end (H) of the second elongated element (10b) before winding them on the forming drum (6).

8. Process as claimed in the preceding claim, wherein aligning comprises:
longitudinally and independently moving the first elongated element (10a) and the second elongated element (10b) until each of the heads (H) is brought to a predefined longitudinal position.

9. Process as claimed in one of the claims 7 or 8, comprising, after the alignment, simultaneously advancing the first elongated element (10a) and the second elongated element (10b) by a predefined length, cutting to size a piece of said predefined length from the first elongated element (10a), cutting to size a piece of said predefined length from the second elongated element (10b), advancing the first and the second conveyor (12a, 12b) until the head ends (H) of said first and second elongated element (10a, 10b) are simultaneously laid on the forming drum (6), winding the pieces on the forming drum (6).

10. Apparatus for laying pairs of elongated elements on a forming drum in a process for obtaining tyres for vehicle wheels, comprising:
a pair of devices (11a, 11b) for dispensing a first and a second elongated element (10a, 10b);
a first and a second conveyor (12a, 12b) for making said first and second elongated element (10a, 10b) advance towards a forming drum (6) according to respective substantially parallel supply paths; wherein the forming drum (6) is adapted to receive, on a radially outer surface (6a), said first and second elongated element (10a, 10b);
a first and a second device (27a, 27b) for the lateral alignment respectively of the first and the second elongated element (10a, 10b), each operatively active along the respective supply path and each comprising:
at least one support surface configured for receiving in abutment a lower face of the respective first or second elongated element (10a, 10b) and supporting part of the weight of said first or second elongated element (10a, 10b);
at least one lateral abutment guide (34);
**characterised in that** at least part of said support surface is tilted towards the lateral abutment guide (34), in order to make a longitudinal edge (B) of the respective first or second elongated element (10a, 10b) abut by gravity against said lateral abutment guide (34).

11. Apparatus as claimed in the preceding claim, wherein each of said first and second lateral alignment devices (27a, 27b) comprises a plurality of support rollers (29, 30); wherein a radially peripheral surface of the support rollers (29, 30) defines said at least one support surface; wherein at least one of said support rollers (29, 30) has a rotation axis (Z-Z) tilted to define said at least tilted part of the support surface.

12. Apparatus as claimed in the preceding claim, wherein the tilted rotation axis (Z-Z) delimits a tilt angle (α) with respect to a horizontal plane (P).

13. Apparatus as claimed in one of the preceding claims 10 to 12, wherein the support rollers (29, 30) are arranged in a manner such to define a curved and convex support surface.

14. Apparatus as claimed in one of the preceding claims 11 to 13, wherein each lateral alignment device (27a, 27b) comprises adjustment devices (35) mounted on a support frame (28) and operatively active on the support rollers (30) in order to vary the tilt thereof.

15. Apparatus as claimed in one of the preceding claims 10 to 14, wherein the support rollers (29, 30) are of omnidirectional type.

16. Apparatus as claimed in one of the preceding claims 10 to 15, comprising: a cutting unit (17) comprising at least one cutting blade (18) operatively active on the supply paths upstream of the forming drum (6).

17. Apparatus as claimed in the preceding claim comprising detection devices (24) for detecting the presence of the heads (H) of the elongated elements (10a, 10b), wherein the detection devices (24) are operatively active on the two supply paths and in proximity to the cutting unit (17).

## Patentansprüche

1. Verfahren zur Herstellung von Reifen für Fahrzeugräder, umfassend:
Vorwärtsbewegen eines ersten länglichen Elements (10a) und eines zweiten länglichen Elements (10b) entlang jeweiliger Zuführwege, wobei das erste und das zweite längliche Element (10a, 10b) entlang der jeweiligen Wege langgestreckt sind;
Wickeln des ersten länglichen Elements (10a) und des zweiten länglichen Elements (10b) auf gegenüberliegende Abschnitte - gegenüberliegend in Bezug auf eine axiale Mittellinienebene (W) - einer Formtrommel (6);
wobei das Vorwärtsbewegen umfasst:
seitliches Neigen mindestens eines Abschnitts des ersten länglichen Elements (10a), bis eine entsprechende Längskante (B) des Abschnitts des ersten länglichen Elements (10a) durch Schwerkraft an einer entsprechenden seitlichen Führung (34) in Anlage kommt, und seitliches Neigen mindestens eines Abschnitts des zweiten länglichen Elements (10b), bis eine entsprechende Längskante (34) des Abschnitts des zweiten länglichen Elements (10b) durch Schwerkraft an einer entsprechenden seitlichen Führung (34) in Anlage kommt.

2. Verfahren nach dem vorhergehenden Anspruch, wobei die Abschnitte des ersten länglichen Elements (10a) und des zweiten länglichen Elements (10b) um jeweilige Neigungswinkel (α) geneigt werden; wobei jeder Neigungswinkel (α) zwischen einer Sehne jedes Querschnittsprofils des Querschnitts des länglichen Elements (10a, 10b) und einer horizontalen Ebene abgegrenzt ist.

3. Verfahren nach dem vorhergehenden Anspruch, wobei jedes der länglichen Elemente (10a, 10b) entlang seines Zuführweges Querschnittsprofile aufweist, die mit Ausnahme dieses Abschnitts parallel zueinander sind.

4. Verfahren nach einem der Ansprüche 2 oder 3, wobei jeder Neigungswinkel (α) im Bereich zwischen 1° und 15° liegt.

5. Verfahren nach einem der Ansprüche 2 bis 4, umfassend: Variieren des Neigungswinkels (α), um einen von dem länglichen Element (10a, 10b) auf die jeweilige seitliche Führung (34) ausgeübten Druck zu ändern.

6. Verfahren nach einem der vorhergehenden Ansprüche, wobei die Abschnitte des ersten länglichen Elements (10a) und des zweiten länglichen Elements (10b) in entgegengesetzte Drehrichtungen geneigt werden.

7. Verfahren nach einem der vorhergehenden Ansprüche, umfassend: Zueinander-Ausrichten eines Kopfendes (H) des ersten länglichen Elements (10a) und eines Kopfendes (H) des zweiten länglichen Elements (10b), bevor sie auf die Formtrommel (6) gewickelt werden.

8. Verfahren nach dem vorhergehenden Anspruch, wobei das Ausrichten umfasst: in Längsrichtung unabhängiges Bewegen des ersten länglichen Elements (10a) und des zweiten länglichen Elements (10b), bis jeder der Köpfe (H) in eine vordefinierte Längsposition gebracht ist.

9. Verfahren nach einem der Ansprüche 7 oder 8, nach dem Ausrichten umfassend: gleichzeitiges Vorwärtsbewegen des ersten länglichen Elements (10a) und des zweiten länglichen Elements (10b) um eine vordefinierte Länge, Zuschneiden eines Stücks der vordefinierten Länge aus dem ersten länglichen Element (10a), Zuschneiden eines Stücks der vordefinierten Länge aus dem zweiten länglichen Element (10b), Vorwärtsbewegen des ersten und des zweiten Förderers (12a, 12b), bis die Kopfenden (H) des ersten und des zweiten länglichen Elements (10a, 10b) gleichzeitig auf die Formtrommel (6) gelegt werden, und Wickeln der Stücke auf die Formtrommel (6).

10. Vorrichtung zum Auslegen von Paaren länglicher Elemente auf eine Formtrommel in einem Verfahren zur Herstellung von Reifen für Fahrzeugräder, umfassend:
ein Paar Vorrichtungen (11a, 11b) zum Abgeben eines ersten und eines zweiten länglichen Elements (10a, 10b);
einen ersten und einen zweiten Förderer (12a, 12b), um das erste und das zweite längliche Element (10a, 10b) entsprechend jeweiligen im Wesentlichen parallelen Zuführwegen zu einer Formtrommel (6) vorwärts zu bewegen; wobei die Formtrommel (6) dafür geeignet ist, auf einer radial äußeren Oberfläche (6a) das erste und das zweite längliche Element (10a, 10b) aufzunehmen;
eine erste und eine zweite Vorrichtung (27a, 27b) zur seitlichen Ausrichtung des ersten bzw. des zweiten länglichen Elements (10a, 10b), die im Betrieb jeweils entlang des jeweiligen Zuführweges wirkend sind und jeweils Folgendes umfassen:
mindestens eine Auflagefläche, die dafür ausgelegt ist, dass sie eine Unterseite des ersten bzw. zweiten länglichen Elements (10a, 10b) in Anlage aufnimmt und einen Teil des Gewichts des ersten oder des zweiten länglichen Elements (10a, 10b) trägt;
mindestens eine seitliche Führung (34);
**dadurch gekennzeichnet, dass** mindestens ein Teil der Auflagefläche zur seitlichen Führung (34) hin geneigt ist, damit eine Längskante (B) des jeweiligen ersten oder zweiten länglichen Elements (10a, 10b) durch die Schwerkraft an der seitlichen Führung (34) in Anlage kommt.

11. Vorrichtung nach dem vorhergehenden Anspruch, wobei jede von der ersten und der zweiten Vorrichtung (27a, 27b) zur seitlichen Ausrichtung eine Vielzahl von Stützrollen (29, 30) aufweist; wobei eine radiale Umfangsfläche der Stützrollen (29, 30) die mindestens eine Auflagefläche definiert; wobei mindestens eine der Stützrollen (29, 30) eine Drehachse (Z-Z) aufweist, die geneigt ist, um den mindestens geneigten Teil der Auflagefläche zu definieren.

12. Vorrichtung nach dem vorhergehenden Anspruch, wobei die geneigte Drehachse (Z-Z) einen Neigungswinkel (α) in Bezug auf eine horizontale Ebene (P) abgrenzt.

13. Vorrichtung nach einem der vorhergehenden Ansprüche 10 bis 12, wobei die Stützrollen (29, 30) derart angeordnet sind, dass sie eine gekrümmte und konvexe Auflagefläche definieren.

14. Vorrichtung nach einem der vorhergehenden Ansprüche 11 bis 13, wobei jede Vorrichtung (27a, 27b) zur seitlichen Ausrichtung Einstellvorrichtungen (35) umfasst, die an einen Tragrahmen (28) montiert und im Betrieb auf die Stützrollen (30) einwirkend sind, um deren Neigung zu ändern.

15. Vorrichtung nach einem der vorhergehenden Ansprüche 10 bis 14, wobei die Stützrollen (29, 30) vom omnidirektionalen Typ sind.

16. Vorrichtung nach einem der vorhergehenden Ansprüche 10 bis 15, umfassend: ein Schneidwerk (17) mit mindestens einer Schneidklinge (18), das im Betrieb auf den der Formtrommel (6) vorgelagerten Zuführwegen wirkend ist.

17. Vorrichtung nach dem vorhergehenden Anspruch, umfassend Erfassungsvorrichtungen (24) zum Erfassen des Vorhandenseins der Köpfe (H) der länglichen Elemente (10a, 10b), wobei die Erfassungsvorrichtungen (24) im Betrieb auf den beiden Zuführwegen und in der Nähe des Schneidwerks (17) wirkend sind.

## Revendications

1. Procédé d'obtention de pneus pour roues de véhicule, comprenant le fait :
de faire avancer un premier élément allongé (10a) et un deuxième élément allongé (10b) le long de trajets d'alimentation respectifs, où lesdits premier et deuxième éléments allongés (10a, 10b) s'étendent longitudinalement le long desdits trajets respectifs ;
d'enrouler le premier élément allongé (10a) et le deuxième élément allongé (10b) sur des parties opposées - opposées par rapport à un plan médian axial (W) - d'un tambour de formation (6) ;
dans lequel l'avancement comprend le fait :
d'incliner latéralement au moins une section du premier élément allongé (10a), jusqu'à ce qu'un bord longitudinal (B) respectif de ladite section du premier élément allongé (10a) vienne en butée par gravité contre un guide de butée latéral (34) respectif, et d'incliner latéralement au moins une section du deuxième élément allongé (10b), jusqu'à ce qu'un bord longitudinal (34) respectif de ladite section du deuxième élément allongé (10b) vienne en butée par gravité contre un guide de butée latéral (34) respectif.

2. Procédé tel que revendiqué dans la revendication précédente, dans lequel lesdites sections du premier élément allongé (10a) et du deuxième élément allongé (10b) sont inclinées selon des angles d'inclinaison (α) respectifs ; dans lequel chaque angle d'inclinaison (α) est délimité entre une ligne de corde de chaque profil de section transversale de ladite section de l'élément allongé (10a, 10b) et un plan horizontal.

3. Procédé tel que revendiqué dans la revendication précédente, dans lequel chacun des éléments allongés (10a, 10b) présente, le long de son trajet d'alimentation, des profils de section transversale qui sont parallèles entre eux sauf au niveau de ladite section.

4. Procédé tel que revendiqué dans l'une des revendications 2 et 3, dans lequel chaque angle d'inclinaison (α) est compris entre 1° et 15°.

5. Procédé tel que revendiqué dans l'une des revendications 2 à 4, comprenant : la variation de l'angle d'inclinaison (α) pour modifier une pression exercée par l'élément allongé (10a, 10b) contre le guide de butée latéral (34) respectif.

6. Procédé tel que revendiqué dans l'une des revendications précédentes, dans lequel lesdites sections du premier élément allongé (10a) et du deuxième élément allongé (10b) sont inclinées dans des directions de rotation opposées.

7. Procédé tel que revendiqué dans l'une des revendications précédentes, comprenant : l'alignement mutuel d'une extrémité de tête (H) du premier élément allongé (10a) et d'une extrémité de tête (H) du deuxième élément allongé (10b) avant de les enrouler sur le tambour de formation (6).

8. Procédé tel que revendiqué dans la revendication précédente, dans lequel l'alignement comprend : le déplacement longitudinal et indépendant du premier élément allongé (10a) et du deuxième élément allongé (10b) jusqu'à ce que chacune des têtes (H) soit amenée dans une position longitudinale prédéfinie.

9. Procédé tel que revendiqué dans l'une des revendications 7 et 8, comprenant, après l'alignement, l'avancement simultané du premier élément allongé (10a) et du deuxième élément allongé (10b) d'une longueur prédéfinie, la découpe à dimension d'une pièce de ladite longueur prédéfinie à partir du premier élément allongé (10a), la découpe à dimension d'une pièce de ladite longueur prédéfinie à partir du deuxième élément allongé (10b), l'avancement des premier et deuxième transporteurs (12a, 12b) jusqu'à ce que les extrémités de tête (H) desdits premier et deuxième éléments allongés (10a, 10b) soient posées simultanément sur le tambour de formation (6), l'enroulement des pièces sur le tambour de formation (6) .

10. Appareil pour poser des paires d'éléments allongés sur un tambour de formation dans un procédé d'obtention de pneus pour roues de véhicule, comprenant :
une paire de dispositifs (11a, 11b) pour distribuer des premier et deuxième éléments allongés (10a, 10b) ;
des premier et deuxième transporteurs (12a, 12b) pour faire avancer lesdits premier et deuxième éléments allongés (10a, 10b) vers un tambour de formation (6) selon des trajets d'alimentation essentiellement parallèles respectifs ; où le tambour de formation (6) est adapté pour recevoir, sur une surface radialement externe (6a), lesdits premier et deuxième éléments allongés (10a, 10b) ;
des premier et deuxième dispositifs (27a, 27b) pour l'alignement latéral respectivement des premier et deuxième éléments allongés (10a, 10b), chacun étant fonctionnellement actif le long du trajet d'alimentation respectif et comprenant chacun :
au moins une surface de support configurée pour recevoir en butée une face inférieure du premier ou deuxième élément allongé (10a, 10b) respectif et une partie de support du poids dudit premier ou deuxième élément allongé (10a, 10b) ;
au moins un guide de butée latéral (34) ;
**caractérisé en ce qu'**au moins une partie de ladite surface de support est inclinée vers le guide de butée latéral (34), afin de faire venir un bord longitudinal (B) du premier ou deuxième élément allongé (10a, 10b) respectif en butée par gravité contre ledit guide de butée latéral (34) .

11. Appareil tel que revendiqué dans la revendication précédente, dans lequel chacun desdits premier et deuxième dispositifs d'alignement latéral (27a, 27b) comprend une pluralité de rouleaux de support (29, 30) ; dans lequel une surface radialement périphérique des rouleaux de support (29, 30) définit ladite au moins une surface de support ; dans lequel au moins l'un desdits rouleaux de support (29, 30) a un axe de rotation (Z-Z) incliné pour définir ladite au moins une partie inclinée de la surface de support.

12. Appareil tel que revendiqué dans la revendication précédente, dans lequel l'axe de rotation incliné (Z-Z) délimite un angle d'inclinaison (α) par rapport à un plan horizontal (P).

13. Appareil tel que revendiqué dans l'une des revendications 10 à 12 précédentes, dans lequel les rouleaux de support (29, 30) sont agencés de manière à définir une surface de support incurvée et convexe.

14. Appareil tel que revendiqué dans l'une des revendications 11 à 13 précédentes, dans lequel chaque dispositif d'alignement latéral (27a, 27b) comprend des dispositifs de réglage (35) montés sur un cadre de support (28) et fonctionnellement actifs sur les rouleaux de support (30) afin de faire varier l'inclinaison de ceux-ci.

15. Appareil tel que revendiqué dans l'une des revendications 10 à 14 précédentes, dans lequel les rouleaux de support (29, 30) sont de type omnidirectionnel.

16. Appareil tel que revendiqué dans l'une des revendications 10 à 15 précédentes, comprenant : une unité de coupe (17) comprenant au moins une lame de coupe (18) fonctionnellement active sur les trajets d'alimentation en amont du tambour de formation (6).

17. Appareil tel que revendiqué dans la revendication précédente, comprenant des dispositifs de détection (24) pour détecter la présence des têtes (H) des éléments allongés (10a, 10b), dans lequel les dispositifs de détection (24) sont fonctionnellement actifs sur les deux trajets d'alimentation et à proximité de l'unité de coupe (17) .
